# EUROPÄISCHE PATENTSCHRIFT

(11) **EP 1 203 175 B1**
(45) Veröffentlichungstag und Bekanntmachung des Hinweises auf die Patenterteilung: **12.03.2003**
(21) Anmeldenummer: 00962300.0
(22) Anmeldetag: 08.08.2000
(51) Int. Cl.: F16H 45/02, F16F 15/16

(54) **DREHMOMENTWANDLER MIT TORSIONSSCHWINGUNGSDÄMPFER**
TORQUE CONVERTER COMPRISING A TORSIONAL VIBRATION DAMPER
CONVERTISSEUR DE COUPLE COMPRENANT UN AMORTISSEUR DE VIBRATIONS DE TORSION

(30) Priorität: 10.08.1999 DE 19937317
(43) Veröffentlichungstag der Anmeldung: 08.05.2002
(73) Patentinhaber: Voith Turbo GmbH & Co. KG, 89522 Heidenheim (DE)
(72) Erfinder: HANKE, Wolfgang, 89518 Heidenheim (DE); BRENNER, Franz, 89564 Nattheim (DE)
(74) Vertreter: Dr. Weitzel & Partner
(86) Internationale Anmeldenummer: EP0007714
(87) Internationale Veröffentlichungsnummer: WO01011267

(56) Entgegenhaltungen:
- EP-A- 0 450 505
- EP-A- 0 476 803
- EP-A- 0 732 527
- DE-A- 4 106 414
- DE-A- 19 739 634
- US-A- 5 194 045
- US-A- 5 386 896
- US-A- 5 511 640

## Beschreibung

Die Erfindung betrifft eine Anfahreinheit für den Einsatz in Antriebssystemen, insbesondere für den Einsatz in Getrieben von Fahrzeugen, im einzelnen mit dem Merkmal aus dem Oberbegriff des Anspruchs 1.

Getriebe für den Einsatz in Fahrzeugen, insbesondere in Form von automatisierten Schaltgetrieben oder Automatgetrieben sind in einer Vielzahl von Ausführungen bekannt. Diesen gemeinsam ist in der Regel, daß der Anfahrvorgang über ein Kupplungselement in Form einer Reibkupplung oder eines hydrodynamischen Wandlers realisiert wird. Zur Realisierung der Leistungsübertragung in den anderen Übersetzungsbereichen sind diesen Anfahreinheiten in der Regel mechanische Drehzahl-/Drehmomentwandlungseinrichtungen in unterschiedlichen Ausführungen nachgeschaltet. Zur Vermeidung der Einleitung von Torsionsschwingungen in den Antriebsstrang, insbesondere in die Getriebebaueinheit sind in der Regel Vorrichtungen zur Schwingungsdämpfung, beispielsweise in Form eines Torsionsschwingungsdämpfers vorgesehen, welche der Getriebebaueinheit vorgeschaltet sind oder in diese im Bereich der Getriebeeingangswelle integriert sind. Bekannte integrierte Lösungen beinhalten jedoch den Einsatz eines Schwingungsdämpfers, welcher lediglich zur Kompensation oder Verlagerung von Schwingungen verwendet wird oder zusätzlich noch nach dem Reibdämpfungsprinzip arbeitet. Derartige Lösungen führen jedoch nicht immer zu befriedigenden Ergebnissen, insbesondere können aufgrund von stick-slip Effekten Schwingungsanregungen bei kritischen Betriebszuständen des Antriebsstranges nicht vollständig ausgeschlossen werden. Ein weiterer Nachteil besteht darin, daß die Dämpfungsintensität mit derartigen Dämpfungseinrichtungen über dem Betriebsbereich nicht oder nur mit extrem hohem Aufwand variierbar ist. Des weiteren muß aufgrund der zunehmend erhöhten Anforderungen des Umweltschutzes zur Verringerung des Emissionsausstoßes der hydrodynamische Wandler in der Getriebebaueinheit frühzeitiger geschlossen werden, wodurch die Schwingungsanregung deutlich erhöht wird.

Eine gattungsgemäße Ausführung einer Anfahreinheit ist aus der Druckschrift US-A-5 386 896 vorbekannt. Diese offenbart einen hydrodynamischen Drehzahl-/Drehmomentenwandler, umfassend wenigsten ein Pumpenrad und ein Turbinenrad sowie ein Leitrad und eine Überbrückskupplung. Ferner weist die Anfahreinheit eine Vorrichtung zur Dämpfung von Schwingungen auf. Diese umfasst wenigstens einen Torsionsschwingungsdämpfer mit hydraulischer Dämpfung. Der Torsionsschwingungsdämpfer umfasst mindestens einen Primärteil und einen Sekundärteil, welche in Umfangsrichtung relativ zueinander Verdrehbar sind. Ferner sind des weiteren Mittel zur Dämpfungskopplung und Mittel zur Federkopplung vorgesehen. Das Kolbenelement zur Beaufschlagung der Überbrückungskupplung ist zwischen Torsionsschwingungsdämpfer und dem hydrodynamischen Bauelement in axialer Richtung integriert. Die gesamte Anfahreinheit benötigt somit in axialer Richtung beträchtlich Bauraum. Femer sind zur Integration eine Vielzahl von Verbindungen erforderlich, welche ebenfalls wieder Bauraum benötigen.

Der Erfindung liegt daher die Aufgabe zugrunde, eine Anfahreinheit für eine Getriebebaueinheit für den Einsatz in Antriebssystemen von Fahrzeugen derart zu weiterentwickeln, bei welcher eine Schwingungsanregung nahezu in jedem Betriebszustand vermieden wird und deren Dämpfungsverhalten die Möglichkeit der Einstellbarkeit bietet. Der erforderliche Bauraumbedarf soll minimal sein und die gesamte Anfahreinheit geeignet sein, einen hohen Grad der Standardisierung zu erreichen. Des weiteren sollte diese sich durch einen geringen konstruktiven steuerungstechnischen Aufwand auszeichnen und leicht in das Antriebssystem beziehungsweise eine Kraftübertragungseinheit, beispielsweise in Form einer Getriebebaueinheit integrierbar sein.

Die erfindungsgemäße Lösung ist durch die Merkmale des Anspruchs 1 charakterisiert. Vorteilhafte Ausgestaltungen sind in den Unteransprüchen beschrieben.

Die Anfahreinheit umfaßt ein Anfahrelement in Form eines hydrodynamischen Drehzahl-/Drehmomentwandlers und eine Überbrückungskupplung, deren Abtriebseiten wenigstens mittelbar miteinander drehfest verbunden werden. Des weiteren ist eine Vorrichtung zur Schwingungsdämpfung, umfassend wenigstens einen Torsionsschwingungsdämpfer mit hydraulischer Dämpfung vorgesehen.

Der Torsionsschwingungsdämpfer ist vorzugsweise funktional bei Kraftübertragung im Traktionsbetrieb vom Antrieb zum Abtrieb der Anfahreinheit betrachtet der Überbrückungskupplung nachgeschaltet. Die Abtriebseiten von Überbrückungskupplung und Drehzahl-/Drehmomentwandler sind dazu miteinander wenigstens mittelbar drehfest verbunden. Neben der verschleißfreien Arbeitsweise eines Torsionsschwingungsdämpfers mit hydraulischer Dämpfung bietet dessen Einsatz in einer Anfahreinheit in einem Antriebsstrang den Vorteil, daß über den gesamten Betriebsbereich aufgrund der Vermeidung der bei einer mechanischen Dämpfungseinrichtung in Form eines Reibdämpfers vorliegenden Haftphasen eine Schwingungsanregung nahezu ausgeschlossen werden kann. Die Dämpfungsintensität kann dabei auf einfache Art und Weise über die Viskosität des verwendeten Dämpfungsmedium oder Variation der Spaltgeometrien mit sehr geringem Aufwand eingestellt werden. Auch ist die sich einstellende Dämpung geschwindigkeitsproportional, was bedeutet, daß hohe Frequenzen oder hohe Amplituden zu einer hohen Dämpfung führen.

Die Vorrichtung zur Schwingungsdämpfung umfaßt vorzugsweise lediglich einen Torsionsschwingungsdämpfer mit hydraulischer Dämpfung. Die Anordnung der Vorrichtung zur Schwingungsdämpfung bzw. zumindest des Torsionsschwingungsdämpfers mit hydraulischer Dämpfung erfolgt in Einbaulage betrachtet bei Kraftübertragung im Traktionsbetrieb vom Antrieb betrachtet:
a) räumlich vor dem hydrodynamischen Drehzahl-/Drehmomentwandler und hinter der Überbrückungskupplung oder
b) räumlich vor dem hydrodynamischen Drehzahl-/Drehmomentwandler und in einer Ebene mit der Überbrückungskupplung oder
c) räumlich vor dem hydrodynamischen Drehzahl-/Drehmomentwandler und der Überbrückungskupplung.

In einer besonders vorteilhaften Ausgestaltung der Anfahreinheit ist die Vorrichtung zur Schwingungsdämpfung, insbesondere der Torsionsschwingungsdämpfer mit hydraulischer Dämpfung Bestandteil der Überbrückungskupplung.

Der Torsionsschwingungsdämpfer mit hydraulischer Dämpfung fungiert als hochelastische Kupplung, d.h. Kupplung mit geringer Steifigkeit zur Drehmomentübertragung zwischen dem Antrieb der Anfahreinheit und dem Abtrieb. Der Torsionsschwingungsdämpfer mit hydraulischer Dämpfung umfaßt ein, mit dem Antrieb oder dem Abtrieb der Anfahreinheit wenigstens mittelbar drehfest koppelbares Primärteil und ein mit dem Abtrieb beziehungsweise dem Antrieb wenigstens mittelbar koppelbares Sekundärteil, wobei Primärteil und Sekundärteil über wenigstens eine Dämpfungs- und Federkopplung miteinander koppelbar sind. Dazu sind erste Mittel zur Realisierung einer Federkopplung und weitere zweite Mittel zur Realisierung einer Dämpfungskopplung vorgesehen, wobei vorzugsweise eine funktionale Aufteilung zwischen den Mitteln zur Realisierung der Federkopplung und den weiteren zweiten Mitteln zur Realisierung der Dämpfungskopplung vorgesehen ist. Eine Überschneidung der Funktionen ist ebenfalls denkbar. Dabei wird über die Mittel zur Federkopplung die Funktion einer elastischen Kupplung realisiert. Unter den Begriff Federkopplung sind dabei jedoch nicht nur Verbindungsmöglichkeiten mittels Federeinrichtungen zu verstehen, sondern jegliche Verbindungselemente mit einer Federcharakteristik oder einem elastischen Verhalten. Vorzugsweise sind dabei die ersten Mittel zur Realisierung der Federkopplung und die zweiten Mittel zur Realisierung der Dämpfungskopplung in separaten, räumlich voneinander getrennt angeordneten Kammern, welche zwischen dem Primärteil und dem Sekundärteil ausgebildet werden, angeordnet. Die Mittel zur Realisierung der Dämpfungskopplung umfassen dabei wenigstens eine mit Hydraulikflüssigkeit und/oder einem anderen Dämpfungsmedium befüllbare Kammer, welcher wiederum Mittel zur Beeinflussung des Dämpfungsverhaltens zuordenbar sein können. Denkbar sind jedoch auch Ausführungen mit wenigstens teilweiser Funktionsüberschneidung zwischen den Mitteln zur Federkopplung und den Mitteln zur Dämpfungskopplung.

Vorzugsweise umfassen die Mittel zur Beeinflussung des Dämpfungsverhaltens wenigstens eine, einer Dämpfungskammer zugeordnete Drosselstelle, welche in der Vorrichtung zur Schwingungsdämpfung bzw. dem Torsionsschwingungsdämpfer mit hydraulischer Dämpfung integriert ist. Vorzugsweise ist die Drosselstelle direkt in der Dämpfungskammer angeordnet.

Eine besonders kompakte und hinsichtlich ihrer Funktion zuverlässige Ausführung eines Torsionsschwingungsdämpfers umfaßt des weiteren weitere dritte Mittel zur Begrenzung des Verdrehwinkels zwischen Primärund Sekundärteil, welche der Dämpfungskammer zugeordnet sind und die die Dämpfungskammer in wenigstens zwei Teilkammern unterteilen, welche über wenigstens eine Drosselstelle miteinander verbunden sind, wobei die dritten Mittel an der Bildung der Drosselstelle beteiligt sind. Für die Ausbildung der Drosselstelle bestehen die folgenden Möglichkeiten:
a) Integration der Drosselstelle in den dritten Mitteln;
b) Ausbildung der Drosselstelle zwischen den dritten Mitteln und den räumlichen Begrenzungen der Dämpfungskammer durch das Primärteil und das Sekundärteil.

Diese Ausführung ermöglicht eine selbsttätig erfolgende Beeinflußbarkeit des Dämpfungsverhaltens durch Beeinflussung der in den einzelnen Teilkammern enthaltenen Dämpfungsmedienmengen, welche bei Verdrehung des Primärteiles gegenüber dem Sekundärteil in Umfangsrichtung erzielt werden. Die dritten Mittel sind zu diesem Zweck entweder in Umfangsrichtung fest am Primärteil oder dem Sekundärteil angeordnet und erstrecken sich in die Dämpfungskammer hinein. Dabei können die dritten Mittel beispielsweise wenigstens einen, am Sekundärteil angeordneten Vorsprung umfassen, welcher in Aussparungen in das Primärteil in Einbaulage in Umfangsrichtung derart eingreift, daß der Vorsprung relativ gegenüber dem Primärteil verschiebbar ist. Die Aussparungen am Primärteil in Umfangsrichtung bilden dann einen Anschlag für den Vorsprung des Sekundärteils. In Analogie dazu kann der Vorsprung auch am Primärteil ausgebildet sein und in die zur Bildung der Dämpfungskammer erforderlichen Ausnehmungen am Sekundärteil eingreifen. Zur Drehmomentübertragung ist zwischen dem Primärteil und dem Sekundärteil wenigstens eine, vorzugsweise in Umfangsrichtung angeordnete und wirksam werdende Druckfedereinrichtung vorgesehen. Des weiteren sind zwischen dem Primärteil und dem Sekundärteil Mittel zur Dämpfung von Drehschwingungen angeordnet, welche einer Relativbewegung des Primärteiles gegenüber dem Sekundärteil entgegenwirken und die durch die Relativbewegung des Primärteiles gegenüber dem Sekundärteil von den Schubkräften geleistete Arbeit beispielsweise in Wärme umwandeln.

In einer weiteren vorteilhaften Ausführung ist es vorgesehen, daß das Dämpfungsmedium im Bereich der Einrichtung zur Realisierung der Verdrehwinkelbegrenzung eingebracht wird. Auch eine vollständige Befüllung beziehungsweise Ausfüllung des Zwischenraumes zwischen Primär- und Sekundärteil zusätzlich oder in Übernahme der Funktion der Dämpfungskammer ist möglich.

Die Versorgung mit Hydraulikfluid als Dämpfungsmedium kann einmalig von außen, während des Betriebes einmalig oder mehrmalig oder durch Austausch über ein Hydraulikflüssigkeitsversorgungssystem erfolgen. Des weiteren kann die Versorgung einmalig mittels einer separaten Betriebsmittelversorgungseinrichtung erfolgen, das heißt durch eine eigene Dämpfungsfüllung oder aber direkt vom zu dämpfenden Aggregat über entsprechende Versorgungsleitungen. Denkbar ist in diesem Zusammenhang auch die Ausbildung eines Kreislaufes, welcher es ermöglicht, die Hydraulikflüssigkeit immer auf einer konstanten Temperatur zu halten. In diesem Fall besteht die Möglichkeit auch qualitativ geringwertigere Hydraulikflüssigkeiten als Dämpfungsmedium einzusetzen.

Vorzugsweise handelt es sich bei der Überbrückungskupplung um eine mechanische Kupplung in Scheibenbauweise, die als nasse Lamellenkupplung ausgeführt ist. Dies bedeutet, daß die Lamellen naß laufen. Dies kann auf einfache Weise dadurch realisiert werden, daß das sich außerhalb des Arbeitsraumes des hydrodynamischen Drehzahl-/Drehmomentwandlers befindliche Betriebsmittel gleichzeitig als Schmiermittel für die Überbrückungskupplung genutzt wird. Dabei handelt es sich in der Regel um das im Betriebsmittelsumpf des Wandlers oder in einer Speicherkammer angesammelte Betriebsmittel. In diesem Fall sind keine zusätzlichen Abdichtmaßnahmen zwischen Wandler und Überbrückungskupplung vorzusehen und die Überbrückungskupplung ist in einfacher Weise im Gehäuse des Wandlers integrierbar, wobei eine Betriebsmittelversorgungsquelle für zwei unterschiedliche Funktionen, nämlich die Funktion des hydrodynamischen Wandlers als Anfahrelement und die Schmierung der Überbrückungskupplung verwendet werden kann. Damit wird eine hinsichtlich Aufbau und Funktionalität besonders kompakte Bauform eines verschleißfreien Anfahrelementes realisiert.

Eine vorteilhafte Weiterentwicklung der oben genannten Ausführung besteht darin, daß auch für den Torsionsschwingungsdämpfer das Dämpfungsmedium vom Betriebsmittel des Wandlers beziehungsweise dem Schmiermittel der Überbrückungskupplung gebildet wird.

Eine besonders vorteilhafte Ausgestaltung der Anfahreinheit besteht darin, die Funktion der Kupplungseingangs- oder Ausgangsscheibe der Überbrückungskupplung einem Element, Primärteil oder Sekundärteil des Torsionsschwingungsdämpfers zuzuordnen, womit eine besonders kompakte Ausführung der Anfahreinheit hinsichtlich benötigter Baulänge erzielt werden kann. Die Anzahl der zu realisierenden Verbindungen zwischen den einzelnen Elementen reduziert sich stark. Vorzugsweise bildet das Primärteil die Kupplungsausgangsscheibe der Überbrückungskupplung und das Sekundärteil ist mit dem Turbinenteil des hydrodynamischen Drehzahl-/Drehmomentwandlers verbunden.

In einer weiteren, besonders vorteilhaften Ausgestaltung wird zur feinfühligeren Abstimmung des Dämpfungsverhaltens auf die einzelnen Betriebsbereiche in dem mit einem Dämpfungsmedium gefüllten Innenraum zwischen den beiden Bauelementen Primärteil und Sekundärteil ein sogenannter schwimmender Dämpfungsring angeordnet, der weder mit der einen noch mit der anderen Masse in formschlüssiger Verbindung steht. Dieser schwimmende Dämpfungsring bildet dabei mit einem ersten Bauelement, beispielsweise dem Primärteil oder Sekundärteil zumindest eine erste Verdrängungskammer und mit dem zweiten Bauelement, das heißt dem Sekundärteil oder dem Primärteil zumindest eine zweite Verdrängungskammer. Auf diese Weise ist der schwimmende Dämpfungsring einem freien Kräftespiel während der Relativbewegung vom Primärteil und Sekundärteil ausgesetzt, wobei er gegenüber jedem der beiden Bauelemente jeweils begrenzt verdrehbar ist. Unter Berücksichtigung der Abstützung des schwimmenden Dämpfungsringes durch das Dämpfungsmedium sowie der zur Verfügung stehenden Spaltquerschnitte ist es dann möglich, daß bei kleinen Schwingungsamplituden nur noch die eine Verdrängungskammer zur Dämpfung wirksam wird. Die Dämpfung hierbei ist gezielt klein gehalten, um die notwendige Schwingungsisolation zu erzielen. Bei großen Schwingungsamplituden, insbesondere auch bei niedrigerer Schwingungsfrequenz ist die zweite Verdrängungskammer wirksam, nämlich immer dann, wenn die begrenzte Verdrehbarkeit des schwimmenden Dämpfungsringes gegenüber einem der beiden Bauelemente ausgenutzt und die Verdrehbarkeit gegenüber dem anderen Bauelement noch zur Verfügung steht. Die Dämpfung in diesem Bereich ist aufgrund der Spaltgeometrien groß gehalten, um größere Schwingunsamplituden stark zu dämpfen. Der Dämpfungsring selbst kann einteilig oder aber auch mehrteilig in Umfangsrichtung ausgeführt werden.

Vorzugsweise sind Überbrückungskupplung und hydrodynamischer Drehzahl-/Drehmomentwandler parallel geschaltet, aber nie in gemeinsamem Einsatz beziehungsweise Eingriff. Der Vorteil einer derartigen Anordnung besteht dabei darin, daß im wesentlichen jeweils nur zwei Zustände bezüglich der Leistungsübertragung vom Antrieb zum Abtrieb unterschieden werden können, wobei die Leistungsübertragung entweder rein mechanisch vom Antrieb der Anfahreinheit über die Überbrückungskupplung auf den Abtrieb der Antriebseinheit oder hydrodynamisch über den hydrodynamischen Drehzahl-/Drehmomentwandler erfolgt. Dies ermöglicht durch geeignete Ansteuerung des hydrodynamischen Bauelementes die Ausnutzung der Vorteile der hydrodynamischen Leistungsübertragung für bestimmte Fahrzustände, insbesondere für den Anfahrzustand. Dieser kann vollständig verschleißfrei erfolgen, wobei in allen anderen Fahrzuständen eine vollständige Überbrückung realisiert wird.

Die erfindungsgemäße Integration der Vorrichtung zur Schwingungsdämpfung, umfassend wenigstens einen Torsionsschwingungsdämpfer mit hydraulischer Dämpfung, in der Anfahreinheit ermöglicht die Schaffung einer multifunktionalen Antriebskomponente mit geringem Bauraumbedarf, wobei diese Elemente vorzugsweise in einem gemeinsamen Gehäuse integriert sind. Als gemeinsames Gehäuse kann dabei
a) das Gehäuse des hydrodynamischen Drehzahl-/Drehmomentwandlers oder
b) ein Gehäuse der Anschlußelemente, insbesondere der Überbrückungskupplung oder
c) das Gehäuse der Kraftübertragungseinheit, insbesondere eines Getriebes
verwendet werden. In den Fällen a) und b) besteht dabei die Möglichkeit entsprechend einer weiteren vorteilhaften Ausgestaltung der Erfindung eine modulare, selbständig handelbare Baueinheit mit einer Antriebsseite und einer Abtriebsseite zu schaffen.

Die konkrete konstruktive Ausführung des Torsionsschwingungsdämpfers mit hydraulischer Dämpfung liegt im Ermessen des Fachmannes und richtet sich nach den gegebenen Einsatzerfordernissen.

Die Kopplung der Abtriebsseite mit den Anschlußelementen, beispielsweise einer Drehzahl-/Drehmomentenwandlungseinrichtung einer Kraftübertragungseinheit, insbesondere einer Getriebebaueinheit, speziell dem mechanischen Übertragungsteil einer Getriebebaueinheit, und der Antriebsseite der Anfahreinheit mit der Getriebeeingangswelle oder der Antriebsmaschine oder einem anderen, zwischen Antriebsmaschine und Anfahreinheit angeordneten Element erfolgt durch Kraft- und/oder Formschluß. Im einfachsten Fall wird dabei die gesamte modulare Baueinheit auf die Getriebeeingangswelle oder bei Bildung der Getriebeeingangswelle von der Antriebsseite der Anfahreinheit auf den Eingang des nachgeordneten Übertragungsmittels, bei Getriebebaueinheiten der nachgeordneten drehzahl-/Drehmomentenwandlungseinrichtung aufgesteckt. Andere Ausführungen zur Realisierung einer drehfesten Verbindung zwischen dem Antrieb der Anfahreinheit und der Getriebeeingangswelle sind denkbar und liegen im Ermessen des zuständigen Fachmannes.
Bezüglich der Ausführung der Überbrückungskupplung bestehen ebenfalls eine Vielzahl von Möglichkeiten. Diese ist in der Regel als mechanische Reibkupplung, vorzugsweise in Lamellenbauart ausgeführt. In diesem Fall umfaßt diese wenigstens eine Kupplungseingangsscheibe und eine mit dieser wenigstens mittelbar in Wirkverbindung bringbare Kupplungsausgangsscheibe, welche mit dem Abtrieb der Anfahreinheit wenigstens mittelbar, d.h.entweder direkt oder unter Zwischenschaltung weiterer Übertragungsmittel drehfest verbunden ist. Im Fall der Ausgestaltung der Vorrichtung zur Schwingungsdämpfung als Bestandteil der Überbrückungskupplung wird von der Vorrichtung zur Schwingungsdämpfung die Kupplungsausgangsscheibe gebildet. Die Kopplung mit dem Abtrieb der Anfahreinheit erfolgt dann über die Vorrichtung zur Schwingungsdämpfung, welche drehfest mit dem Abtrieb des Drehzahl-/Drehmomentwandlers, insbesondere dem Turbinenrad verbunden ist.

Die drehfeste Verbindung zwischen den Abtriebsseiten des hydrodynamischen Drehzahl-/Drehmomentwandlers, insbesondere des Turbinenrades und der Überbrückungskupplung kann dabei lösbar oder unlösbar bezüglich der Montage erfolgen. Die Verbindung selbst kann im erstgenannten Fall form- und/oder kraftschlüssig erfolgen. Im zweiten Fall wird die drehfeste Verbindung entweder durch Stoffschluß oder durch Ausführung als integrale Baueinheit von Turbinenrad des hydrodynamischen Drehzahl-/Drehmomentwandlers und Abtrieb der Überbrückungskupplung, das heißt der Kupplungsausgangsscheibe realisiert. Die Auswahl der Verbindungsart erfolgt dabei in Abhängigkeit von der vorzunehmenden Auslegung des hydrodynamischen Drehzahl-/Drehmomentwandlers und/oder der Überbrückungskupplung und den konkreten Erfordernissen des Einsatzfalles. In Analogie gilt diese Aussage auch für die Realisierung der drehfesten Verbindung zwischen der Vorrichtung zur Schwingungsdämpfung und dem Abtrieb beziehungsweise bei Ausführung der Kupplungsausgangsscheibe der Überbrückungskupplung in Form der Vorrichtung zur Schwingungsdämpfung für die Verbindung zwischen der Vorrichtung zur Schwingungsdämpfung mit dem hydrodynamischen Drehzahl-/Drehmomentwandler.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung den Grundaufbau einer erfindungsgemäßen Anfahreinheit mit Anordnung einer Einrichtung zur Schwingungsdämpfung zwischen Überbrückungskupplung und hydrodynamischem Drehzahl-/Drehmomentenwandler;
- Figur 2: verdeutlicht eine konstruktive Ausführung der erfindungsgemäßen Anfahreinheit mit der vorteilhaften Ausgestaltung der Integration der Einrichtung zur Schwingungsdämpfung in Form eines hydraulischen Schwingungsdämpfers in der Überbrückungskupplung;
- Figuren 3a und 3b: verdeutlichen eine mögliche Ausführung des hydraulischen Schwingungsdämpfers;
- Figuren 4a und 4b: verdeutlichen eine weitere mögliche Ausführung einer Einrichtung zur Schwingungsdämpfung mit schwimmenden Dämpfungsring.

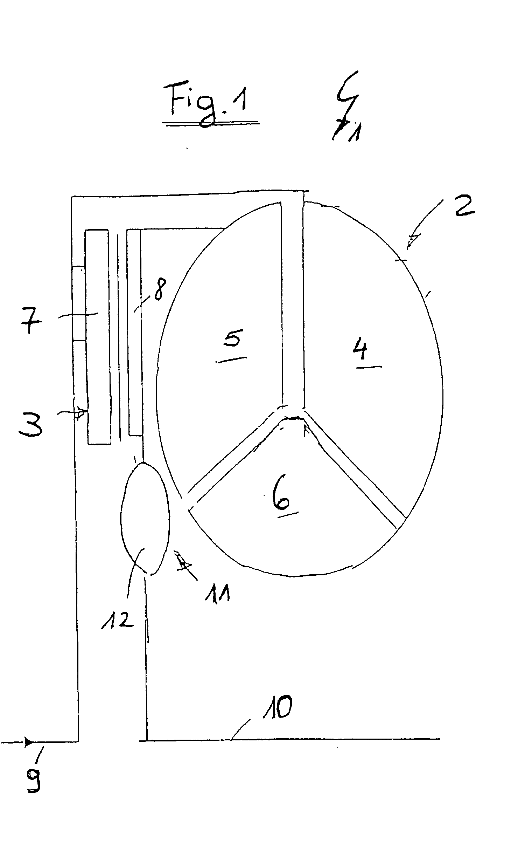

Die Figur 1 verdeutlicht in schematisch vereinfachter Darstellung den Grundaufbau einer erfindungsgemäß gestalteten Anfahreinheit 1. Dieser umfaßt wenigstens einen hydrodynamischen Drehzahl-/Drehmomentwandler 2 und eine Überbrückungskupplung 3. Der hydrodynamische Drehzahl-/Drehmomentwandler 2 und die Überbrückungskupplung 3 sind parallel geschaltet. Der Drehzahl-/Drehmomentwandler umfaßt wenigstens ein Pumpenrad 4, ein Turbinenrad 5 und ein Leitrad 6. Denkbar sind auch Ausführungen mit mehreren Leiträdern. Die Überbrückungskupplung 3 ist vorzugsweise als Scheibenkupplung ausgeführt, vorzugsweise in Form einer Lamellenkupplung. Diese umfaßt wenigstens eine Kupplungseingangsscheibe 7 und eine Kupplungsausgangsscheibe 8, welche wenigstens mittelbar reibschlüssig miteinander in Wirkverbindung bringbar sind. Die Anfahreinheit 1 umfaßt des weiteren einen, mit einer hier im einzelnen nicht dargestellten Antriebsmaschine wenigstens mittelbar koppelbaren Antrieb 9 und einen mit dem Abtrieb des Antriebssystems wenigstens mittelbar koppelbaren Abtrieb 10. Der Antrieb 9 und der Abtrieb 10 sind in der Regel, jedoch nicht zwingend in Form von Voll- oder Hohlwellen ausgeführt. Erfindungsgemäß sind des weiteren die Abtriebsseiten des hydrodynamischen Drehzahl-/Drehmomentwandlers 2 und der Überbrückungskupplung 3 wenigstens mittelbar unter Zwischenschaltung einer Vorrichtung zur Schwingungsdämpfung 11, umfassend wenigstens einen Torsionsschwingungsdämpfer mit hydraulischer Dämpfung 12 miteinander drehfest verbunden. Als Abtriebsseite des hydrodynamischen Drehzahl-/Drehmomentwandlers 2 fungiert dabei das Turbinenrad 5 und als Abtriebseite der Überbrückungskupplung 3 die Kupplungsausgangsscheibe 8. Der Leistungsfluß über die Anfahreinheit 1 erfolgt dadurch beim Einsatz in Fahrzeugen im Traktionsbetrieb betrachtet, das heißt bei Leistungsübertragung von einer Antriebsmaschine auf die anzutreibenden Räder dabei im dargestellten Fall entweder über den hydrodynamischen Drehzahl-/Drehmomentwandler 2 oder die Überbrückungskupplung 3. Der Abtrieb des hydrodynamischen Drehzahl-/Drehmomentwandlers, das heißt das Turbinenrad 5 und der Abtrieb der Überbrückungskupplung 3, das heißt die Kupplungsausgangsscheibe 8 sind zu diesem Zweck wenigstens mittelbar mit dem Abtrieb 10 der Anfahreinheit 1 drehfest verbunden, welcher bei Integration der Anfahreinheit 1 in einer Getriebebaueinheit gleichzeitig als Antrieb beziehungsweise Eingang einer nachgeordneten Drehzahl-/Drehmomentenwandlungseinrichtung, beispielsweise in Form einer mechanischen Übertragungseinheit, umfassend wenigstens einen Planetenradsatz und/oder Stirnradsatz, fungiert und beispielsweise von einer Welle gebildet wird.

Die räumliche Anordnung der Überbrückungskupplung 3 gegenüber dem Drehzahl-/Drehmomentwandler 2 erfolgt bei Integration der Anfahreinheit 1 in einem Antriebsstrang in Einbaulage in Kraftflußrichtung betrachtet räumlich vor dem Drehzahl-/Drehmomentwandler 2. Die Realisierung des Anfahrvorganges erfolgt durch Betätigung beziehungsweise die Vornahme Leistungsübertragung über den hydrodynamischen Drehzahl-/Drehmomentwandler 2. Die Überbrückungskupplung 3 ist in diesem Zustand nicht betätigt. Der hydrodynamische Drehzahl-/Drehmomentwandler 2 übernimmt dabei die im wesentlichen verschleißfreie Übertragung des Momentes der mit der Anfahreinheit 1 gekoppelten Antriebsmaschine auf die anzutreibenden Elemente. In Abhängigkeit von der Auslegung des Drehzahl-/Drehmomentwandlers 2 erfolgt ab Erreichen eines bestimmten Übersetzungsverhältnisses dessen Überbrückung durch eine Kopplung von Pumpenrad 4 und Turbinenrad 5 mittels der Überbrückungskupplung 3. Die Vorzüge der hydrodynamischen Leistungsübertragung über einen Drehzahl-/Drehmomentwandler werden dadurch im Bereich hoher Drehzahldifferenzen, das heißt im Anfahrbereich voll ausgenutzt, während in allen anderen Fahrzuständen, in denen sich eine hydrodynamische Leistungsübertragung negativ auf den Gesamtwirkungsgrad auswirken würde, der hydrodynamische Teil aus dem Leistungsfluß herausgenommen und die Leistung nach Abschluß des Anfahrvorganges durch Schließen der Überbrückungskupplung 3 im wesentlichen ohne Verluste auf den Abtrieb 10 und damit beim Einsatz in Fahrzeugen auf die Räder übertragen wird. insbesondere wird dabei auf die Möglichkeit der nahezu verschleißfreien Übertragung im Bereich hohen Schlupfes über einen sehr langen Zeitraum verwiesen.

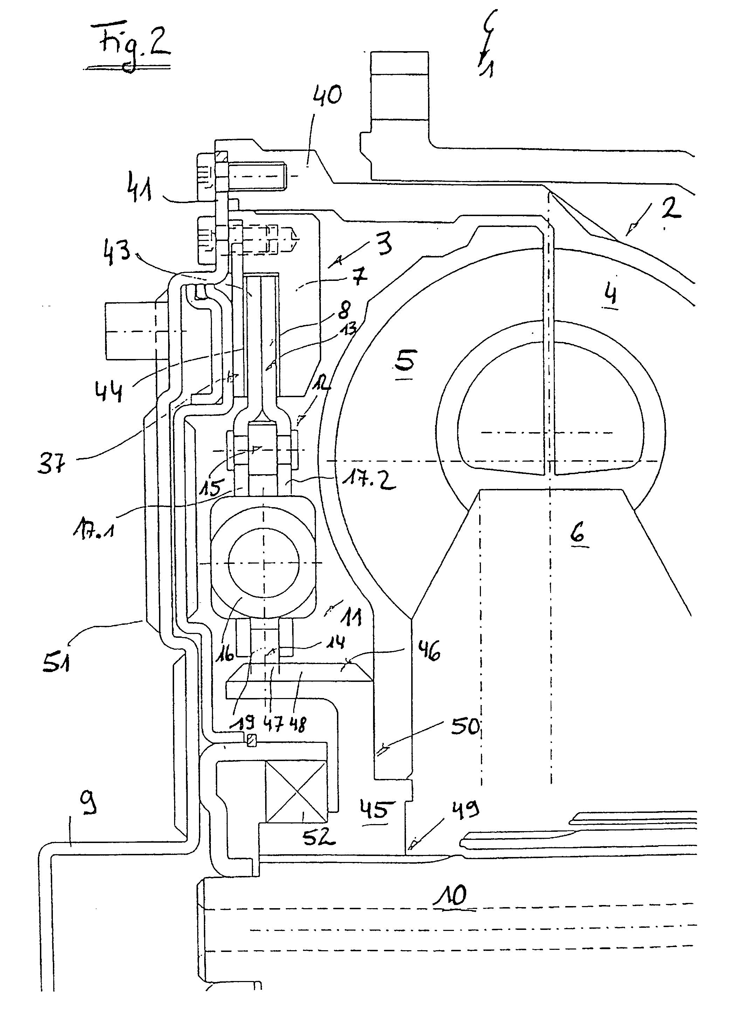

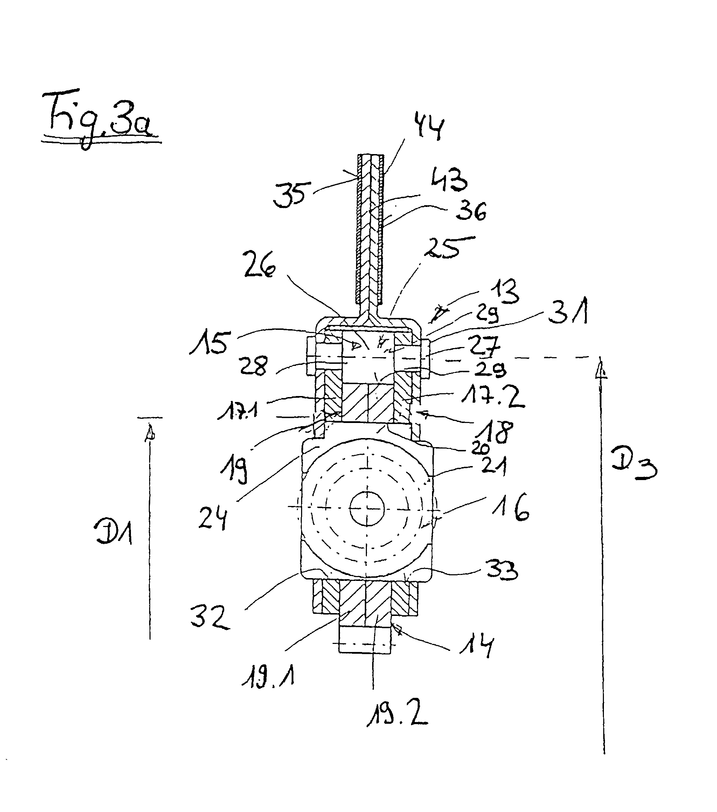

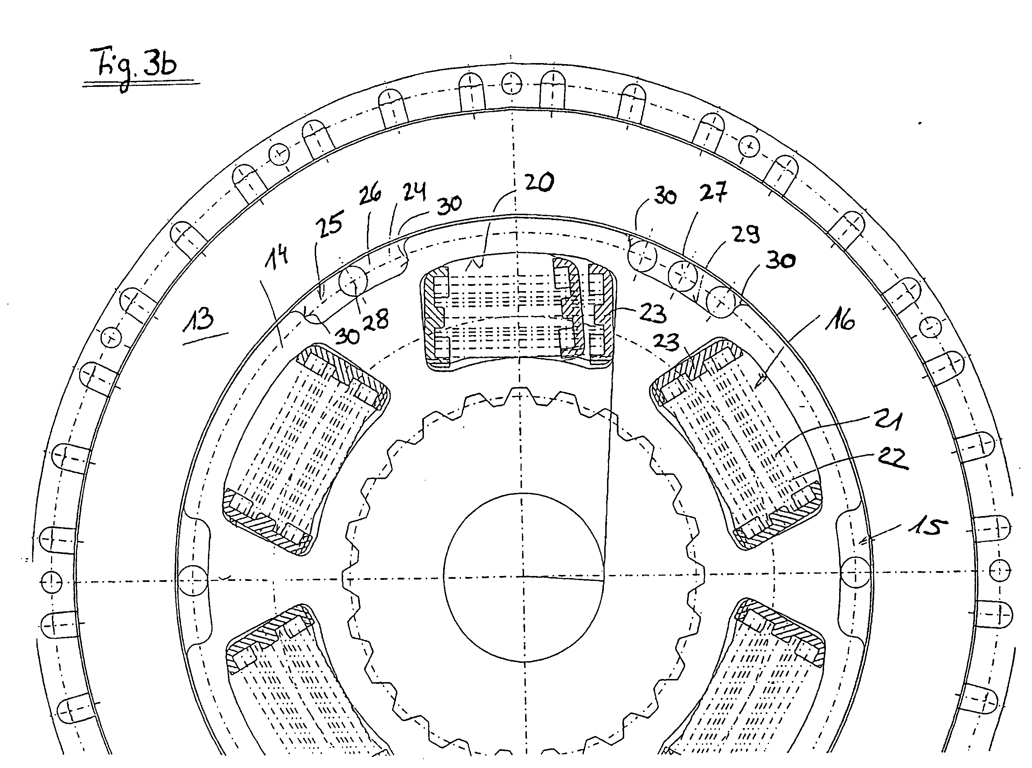

Der erfindungsgemäß vorgesehene Torsionsschwingungsdämpfer mit hydraulischer Dämpfung 12 umfaßt, wie in den Figuren 2 und 3 dargestellt, wenigstens ein Primärteil 13 und ein Sekundärteil 14, die in Umfangsrichtung relativ zueinander verdrehbar sind und Mittel zur Dämpfungskopplung 15 und Mittel zur Federkopplung 16 aufweisen. Die Vorrichtung zur Dämpfung von Schwingungen 11 übernimmt die Funktion der Dämpfung von Schwingungen zwischen der An- und Abtriebsseite beziehungsweise den mit Primärteil 13 und Sekundärteil 14 verbundenen Elementen. Die elastische Kupplung verlagert Resonanzen und hat somit einen Isolationseffekt. Die Vorrichtung zur Schwingungsdämpfung 11 ist im dargestellten Fall bei Integration in der Anfahreinheit 1 funktional dem Abtrieb 10 zugeordnet. Zu diesem Zweck ist der Torsionsschwingungsdämpfer mit hydraulischer Dämpfung 12 wenigstens mittelbar drehfest mit dem Abtrieb 10, vorzugswiese über eine drehfest mit dem Abtrieb 10 verbundenen Welle verbunden, wobei sowohl bei Leistungsübertragung über die Überbrückungskupplung 3 als auch über den hydrodynamischen Drehzahl-/Drehmomentwandler 2 der Torsionsschwingungsdämpfer 12 hinter diesen Komponenten wirksam wird. Rein räumlich in Einbaulage betrachtet ist der Torsionsschwingungsdämpfer 12 zwischen der Überbrückungskupplung 3 und dem hydrodynamischen Drehzahl-/Drehmomentwandler 2 angeordnet. Vorzugsweise bilden die Bauelemente hydrodynamischer Drehzahl-/Drehmomentwandler 2, Überbrückungskupplung 3 sowie hydraulischer Torsionsschwingungsdämpfer 12 eine modulare Baueinheit, welche vormontierbar und als eigenständige Baueinheit anbietbar sowie handelbar ist. Diese kann dann beispielsweise als Modul in einem Getriebe integriert werden, wobei die Integration durch Aufstecken, Anflanschen oder eine andere Art der Verbindung realisiert werden kann. Bezüglich der konkreten Ausführung eines Torsionsschwingungsdämpfers mit hydraulischer Dämpfung wird auf die Figuren 3a und 3b verwiesen.

Die Figur 2 verdeutlicht eine besonders vorteilhafte konstruktive Ausführung der Anfahreinheit 1, bei welcher der Torsionsschwingungsdämpfer mit hydraulischer Dämpfung 12 in der Überbrückungskupplung 3 integriert ist beziehungsweise mit dieser eine bauliche Einheit bildet. Der Grundaufbau entspricht dem in der Figur 1 beschriebenen, weshalb für gleiche Elemente die gleichen Bezugszeichen verwendet werden. Der Primärteil 13 des Torsionsschwingungsdämpfers mit hydraulischer Dämpfung 12 umfaßt dabei im einfachsten Fall zwei scheibenförmige Elemente 17.1 und 17.2. Das Sekundärteil 14 umfaßt wenigstens ein scheibenförmiges Element 19. Das Primärteil 13 ist in radialer Richtung verlängert ausgeführt, vorzugsweise in Form wenigstens eines scheibenförmigen Elementes 43, welches die Kupplungsausgangsscheibe 8 der Überbrückungskupplung 3 bildet. Zum Zusammenwirken von Kupplungseingangsscheibe 7 und Kupplungsausgangsscheibe 8 ist wenigstens eines der beiden Elemente im Wirkbereich, das heißt dem Bereich, welcher beim Anpressen mit dem jeweiligen anderen Element in Berührung kommt, mit einem Reibbelag 44 versehen. Der Begriff Kupplungseingangsscheibe 7 und Kupplungsausgangsscheibe 8 ist nicht zwangsläufig an die Ausgestaltung dieser Elemente als Scheibe gebunden, gemeint ist, daß diese Elemente zumindest scheibenförmige Bereiche aufweisen, zur Bildung einer kraftschlüssigen Verbindung, insbesondere in Form einer Scheibenkupplung. Scheibenkupplung. Das Sekundärteil 14 ist mit dem Abtrieb 10 drehfest verbunden, vorzugsweise über ein Adapterelement 45, welches gleichzeitig der Lagerung beziehungsweise Abstützung des Turbinenrades 5 des hydrodynamischen Drehzahl-/Drehmomentwandlers 2 dient. Die drehfeste Verbindung kann auf unterschiedliche Art und Weise realisiert werden, denkbar sind form- und/oder kraftschlüssige Verbindungen. Im dargestellten Fall erfolgt die Realisierung der drehfesten Verbindung zwischen Sekundärteil 14 und Adapterelement 45 über eine Verzahnung 46. Dazu weisen das Sekundärteil 14 im in Einbaulage radial inneren Bereich eine Innenverzahnung 47 und das Adapterelement 45 im radial äußeren Bereich eine Außenverzahnung 48 auf. Die drehfeste Verbindung 49 zwischen Adapterelement und Abtrieb 10 erfolgt beispielsweise in Form einer Keilwellenverbindung. Eine drehfeste Kopplung 50 zwischen Turbinenrad 5 und Adapterelement 45 erfolgt beispielsweise mittels einer Preßverbindung. Denkbar sind jedoch auch andere Ausführungen. In einer besonders vorteilhaften hier nicht dargestellten Ausgestaltung bilden Adapterelement 45 und Sekundärteil 14 und/oder Adapterelement 45 und Turbinenrad 5 eine bauliche Einheit. Dies bedeutet, daß die jeweiligen Endbereiche von Turbinenrad 5 und/oder Sekundärteil 14 entsprechend auszugestalten sind. Die Abstützung von Abtrieb 10 beziehungsweise der gesamten Anfahreinheit 1 in einem Gehäuse 51 erfolgt beispielsweise über die Lagerung 52. Das Gehäuse 51 entspricht dabei entweder einem, die Anfahreinheit 1 umschließenden Gehäuseteil 39 oder dem Getriebegehäuse.

Die Anpressung beziehungsweise Realisieriung der reibschlüssigen Verbindung zwischen Kupplungseingangsscheibe 7 und Kupplungsausgangsscheibe 8 erfolgt beispielsweise durch Anpressung mittels eines Kolbenelementes 37, welches entweder direkt an der Kupplungseingangs- oder Kupplungsausgangsscheibe 7 bzw. 8 wirksam wird.

Figur 3 verdeutlicht eine konkrete konstruktive Ausführung des Torsionsschwingungsdämpfers mit hydraulischer Dämpfung 12. Die beiden scheibenförmigen Elemente 17.1, 17.2 des Primärteiles 13 bilden einen ersten Teil 19 des Primärteiles 13, welcher mit einem zweiten Teil 18 in Form eines Gehäuseteils über Verbindungselemente 27 verbunden ist. Das Sekundärteil 14 umfaßt zwei scheibenförmige Elemente 19.1 und 19.2. Das Sekundärteil 14 weist in Umfangsrichtung auf einem bestimmten Durchmesser D1 Ausnehmungen 20 auf, welche vorzugsweise in Form von Durchgangsöffnungen ausgeführt sind. Die Kopplung zwischen dem Primärteil 13 und dem Sekundärteil 14 zur Drehmomentenübertragung erfolgt über die Mittel zur Federkopplung 16. Diese umfassen wenigstens eine Federeinrichtung 21, welche wenigstens ein Federelement 22 aufweisen. Die Federelemente 22 der Federeinrichtung 21 sind zu diesem Zweck in den Ausnehmungen 20 im Sekundärteil 14 angeordnet und erstrecken sich in Umfangsrichtung des Sekundärteils 14 und stützen sich am Primärteil 13 ab. Die Anordnung, Auslegung und Funktion der Federelemente 22 wird in der Figur 3b näher erläutert. Die Funktion der Federeinrichtung 21 besteht darin, wenigstens während des gesamten Betriebes Drehmoment auf das Sekundärteil 14 zu übertragen, um dieses in Rotation zu versetzen und die Resonanzfrequenzen zu verlagern.

Die Federeinrichtungen 21 stützen sich dabei beispielsweise an Federtöpfen 23 zwischen Primär- und Sekundärteil 13 beziehungsweise 14 ab. Bezüglich der konkreten Ausgestaltung der einzelnen Elemente kann dabei auf die Ausführungen entsprechend der Druckschriften DE 36 35 043 und DE 39 16 575 verwiesen werden. So ist es beispielsweise denkbar, daß der Primärteil 13 auf einem bestimmten Durchmesser D2 in Umfangsrichtung verlaufende fensterförmige Ausschnitte 53 aufweist, welche hinsichtlich des Abstandes untereinander und ihrer Größe im wesentlichen komplementär zu dem, die Federeinrichtungen 21 aufnehmenden Aussparungen 20 am Sekundärteil 14 ausgebildet und zu diesem in Umfangsrichtung in Einbaulage im unbelasteten Zustand um ca. eine halbe Erstreckung der Ausnehmung in Umfangsrichtung versetzt angeordnet sind. Beide Teile greifen dann tangential an die Federeinrichtungen 21 oder, wie in der Figur 3b dargestellt, an die deren Enden zugeordneten Führungsstücke in Form von federführenden Töpfen 23. Dies gilt auch für die Aussparungen 20 am Sekundärteil 14.

Im Fall des Auftretens von Längs- und/oder Drehschwingungen in der Anfahreinheit 1, insbesondere von Seiten des Antriebes werden diese über die drehfeste Kopplung des Primärteiles 13 bei Schaltung der Überbrückungskupplung 3 in das Sekundärteil 14 eingeleitet. Unter Wirkung eines Torsionsmomentes im Betrieb des rotierenden Bauelementes kommt es dann zum Zusammendrücken der Federeinrichtungen 21 und damit zur Relativbewegung zwischen dem Primär- und dem Sekundärteil 13, 14, was zur Einstellung eines gewissen Verdrehwinkels α führt. Bei Resonanzdurchgängen und beispielsweise bei Laststößen treten hohe Relativbewegungen zwischen Primär- und Sekundärteil auf, die dem Verdrehwinkel α überlagert sind.

Zur Dämpfung dieser Relativbewegungen zwischen dem Primärteil 13 und dem Sekundärteil 14 sind Mittel 15 zur Dämpfungskoppplung vorgesehen. Diese umfassen wenigstens eine Hydraulikflüssigkeit, welche wenigstens in einem Teilbereich eines Zwischenraumes 24, der zwischen dem Primärteil 13 und dem Sekundärteil 14 gebildet wird, einfüllbar ist. Die Befüllung des Zwischenraumes 24 kann dabei derart erfolgen, daß entweder lediglich der Bereich, in welchem sich die Federeinrichtungen 21 befinden oder zusätzliche Kammern 25, welche zwischen Primär- und Sekundärteil 13 und 14 gebildet werden, ausgefüllt wird oder aber der gesamte Zwischenraum zwischen dem Primärteil 13 und dem Sekundärteil 14. Im dargestellten Fall sind spezielle Dämpfungskammern vorgesehen. Diese sind mit 26 bezeichnet. Die Dämpfungskammer 26 kann dabei zwischen der, das Verbindungselement 27 umschließenden Buchse 28 und einem Langloch 29 im Sekundärteil 14 gebildet werden. Für die Befüllung mit Hydraulikflüssigkeiten selbst ergeben sich eine Vielzahl von unterschiedlichen Möglichkeiten. Denkbar ist dabei eine, hier nicht dargestellte Möglichkeit der Zufuhr über eine entsprechende Hydraulikflüssigkeitszufuhreinrichtung oder aber auch die einmalige Befüllung des Zwischenraumes 24. Es besteht dabei theoretisch auch die hier nicht dargestellte Möglichkeit, die Zufuhr beziehungsweise die Versorgung mit Hydraulikflüssigkeit in den Kammern 25 derart zu gestalten, daß das im Zwischenraum 24 vorhandene Hydraulikfluid bei Erwärmung auch ausgetauscht werden kann. In diesem Fall wären jedoch entsprechende Abfuhrleitungen vorzusehen.

Der Verdrehwinkel α in Umfangsrichtung des Primärteiles 13 gegenüber dem Sekundärteil 14, welcher ein Zusammendrücken der Federeinrichtungen 21 bewirkt, die vorzugsweise wenigstens Druckfedern 22 umfassen, kann beispielsweise zusätzlich begrenzt werden. Die Begrenzung erfolgt dann durch entsprechende Anschläge 30 am Sekundärteil 14. Diese Anschläge 30 werden über die Langlöcher 29 im Sekundärteil 14, welche auf einem bestimmten Durchmesser in Umfangsrichtung angeordnet und vorzugsweise in gleichmäßigen Abständen zueinander verteilt sind, realisiert. Dem Sekundärteil 14 sind dazu Vorsprünge 31 im Bereich des Durchmessers D3 am Primärteil 13 zugeordnet, welche in Einbaulage in die Aussparungen beziehungsweise Langlöcher 29 des Sekundärteiles 14 hineinragen. Die Vorsprünge 31 sind dabei derart auszuführen, daß die Langlöcher 29 ohne Probleme in Umfangsrichtung gegenüber den Vorsprüngen verschiebbar sind. Es ist auch denkbar, die Funktion des vorsprungtragenden Elementes dem Sekundärteil 14 zuzuweisen und die Aussparungen am Primärteil 14 vorzusehen. Eine Reibung zwischen beiden, das heißt den Vorsprüngen des Sekundärteiles 14 oder des Primärteiles 13 ist zu vermeiden. Die Vorsprünge selbst können dabei Bestandteile des Sekundärteiles 14 oder des Primärteiles 13 sein, das heißt eine bauliche Einheit mit diesen Elementen bilden oder aber als zusätzliche Elemente ausgeführt werden, die mit dem Primär- oder Sekundärteil gekoppelt sind. Dabei können im dargestellten Fall die Verbindungselemente 27, welche den ersten Teil 19 des Primärteiles mit dem Gehäuseteil 18 verbinden, die Funktion dieser Vorsprünge übernehmen. Das Verbindungselement beziehungsweise die Verbindungselemente 27 erstrecken sich dabei über die Langlöcher 29 des Sekundärteiles 14 hinaus. Die Langlöcher 29, welche sich in Umfangsrichtung am Sekundärteil 14 erstrecken, bilden dann den Anschlag 30 für das Verbindungselement 27, welches bei Relativbewegung des Primärteiles 13 gegenüber dem Sekundärteil 14 den möglichen Verdrehwinkel α begrenzt. Der Verdrehwinkel α ist dabei durch die Erstreckung I der Langlöcher 29 in Umfangsrichtung begrenzt. Die Nutzung von Verbindungselementen zur Realisierung dieser Anschlagsbeziehungsweise Begrenzungsfunktion für den Verdrehwinkel α ermöglicht es, ein kompaktes System mit einfachen, leicht austauschbaren Bauteilen zu schaffen.

Die Figur 3b verdeutlicht dazu einen Ausschnitt auf eine Ansicht auf das Sekundärteil 14 entsprechend der Figur 3a. Daraus sind die Langlöcher 29, die Erstreckung der Langlöcher 29 in Umfangsrichtung, die Verbindungselemente 27 und die Ausnehmungen zur Aufnahme der Federeinrichtungen 21 ersichtlich. Die gleichen Ausnehmungen befinden sich auch an den in Einbaulage anliegenden Bereichen des Primärteiles 13. Diese sind dort mit 32 beziehungsweise 33 für den zweiten Teil 18 des Primärteiles 13 bezeichnet.

Bei der in der Figur 2 wiedergegebenen Ausgestaltung wird die Kupplungsausgangsscheibe 8 vom Primärteil 13 der Einrichtung zur Schwingungsdämpfung 11 gebildet. Unter Berücksichtigung einer Ausgestaltung gemäß den Figuren 3a und 3b wird im einzelnen der zweite Teil 18, welcher das Gehäuseteil bildet, in radialer Richtung verlängert ausgeführt, wobei dieser in Umfangsrichtung betrachtet scheibenförmig gestaltet ist und vorzugsweise zur Realisierung einer Reibkupplung mit Reibbelägen 44 beidseitig beschichtet ist, das heißt auf den im radial verlängerten Bereich gebildeten Außenflächen 35 und 36 des Gehäuseteils 18.
In einer weiteren vorteilhaften Ausgestaltung ist die Eingangsseite der Überbrückungskupplung, das heißt die Kupplungseingangsscheibe 7 mit einem Kolbenelement 37 verbunden, welches beim Lösen der Überbrückungskupplung 3 in axialer Richtung in Einbaulage der Anfahreinheit 1 betrachtet verschoben wird und aufgrund der Relativbewegung auf ein, in einem gemeinsamen Gehäuse 39 befindliches Druckmittel Druck ausübt, wobei der Druck als Stellgröße zur Beaufschlagung der Mittel zur Beeinflussung der Betriebsmittelversorgung des Drehzahl-/Drehmomentwandlers dient. Die Mittel können dabei beispielsweise eine Ventileinrichtung umfassen. Als gemeinsames Gehäuse 39 fungiert dabei eine Gehäuseglocke 40, welche mit dem Pumpenteil 4 des Drehzahl-/Drehmomentwandlers 2 drehfest verbunden ist, vorzugsweise mit diesem eine bauliche Einheit bildet und dem ein Deckelelement 41 zugeordnet ist.

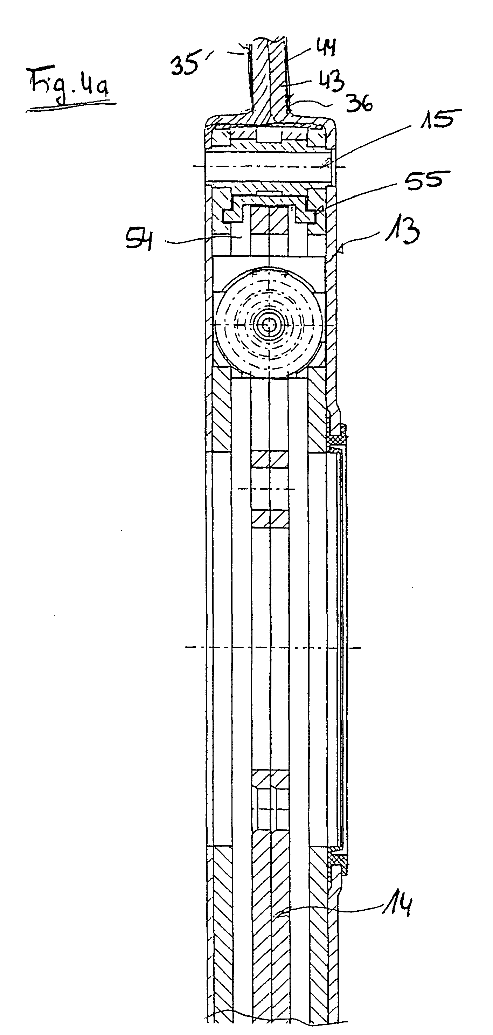

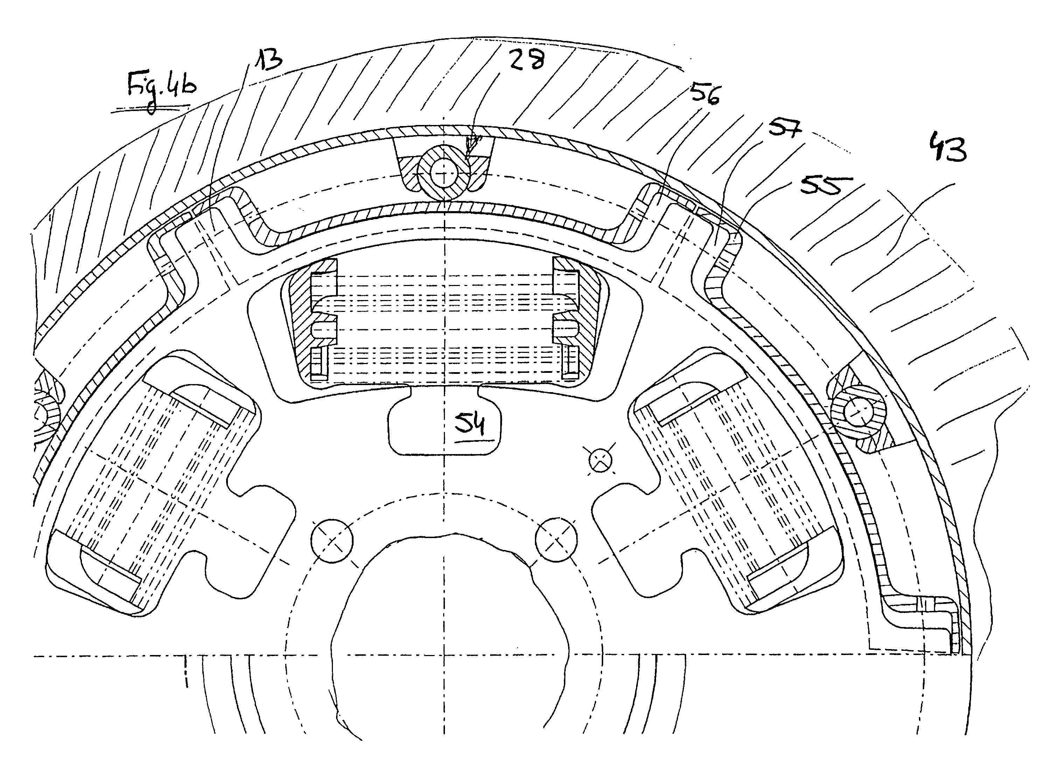

Weitere Ausführungen der Vorrichtung zur Schwingungsdämpfung 11 sind denkbar, beispielsweise wie in der Druckschrift DE 39 23 749 C1 beschrieben. Bei dieser in Figur 4a dargestellten Ausführung im Axialschnitt wird in dem mit einem Dämpfungsmedium gefüllten Innenraum 54 zwischen den beiden Bauelementen - Primärteil 13 und Sekundärteil 14 - ein sogenannter schwimmender Dämpfungsring 55 angeordnet, der weder mit dem Primärteil 13 noch dem Sekundärteil 14 in formschlüssiger Verbindung steht. Der Grundaufbau der Anbindung der Einrichtung zur Schwingungsdämpfung 11 in der Anfahreinheit 1 entspricht dem in der Figur 2 beschriebenen. Eine entsprechende Seitenansicht der Einrichtung zur Schwingungsdämpfung 11 ist in Figur 4b dargestellt. Der schwimmende Dämpfungsring 55 bildet dabei mit dem ersten Bauelement, beispielsweise dem Primärteil 13 zumindest eine erste Verdrängungskammer 56 und mit dem zweiten Bauelement, das heißt dem Sekundärteil 14 zumindest eine zweite Verdrängungskammer 57. Auf diese Weise ist der schwimmende Dämpfungsring 55 dem freien Kräftespiel während der Relativbewegung von Primärteil 13 und Sekundärteil 14 ausgesetzt, wobei er gegenüber jedem der beiden Bauelemente jeweils begrenzt verdrehbar ist. Unter Berücksichtigung der Eigenmasse des schwimmenden Dämpfungsringes 55 sowie der zur Verfügung stehenden Spaltquerschnitte ist es dann möglich, daß bei kleinen Schwingungsamplituden nur noch die eine Verdrängungskammer, beispielsweise 56 zur Dämpfung wirksam wird, während bei großen Schwingungsamplituden, insbesondere auch bei niedrigerer Schwingungsfrequenz die zweite Verdrängungskammer, in diesem Fall 57 wirksam ist, nämlich immer dann, wenn die begrenzte Verdrehbarkeit des schwimmenden Dämpfungsringes 55 gegenüber einem der beiden Bauelemente - 13 oder 14 - ausgenutzt und die Verdrehbarkeit gegenüber dem anderen Bauelement - 14 bzw. 13 - noch zur Verfügung steht. Der Dämpfungsring 55 selbst kann einteilig oder aber auch mehrteilig in Umfangsrichtung ausgeführt werden. Eine mehrteilige Ausführung in axialer Richtung ist ebenfalls denkbar.

Die in den Figuren 1 bis 3 dargestellten Ausführungsmöglichkeiten hinsichtlich der Kombination einer Überbrückungskupplung 3, eines hydrodynamischen Drehzahl-/Drehmomentwandlers 2 und eines Torsionsschwingungsdämpfers 12 stellen mögliche Ausführungsformen dar, auf die jedoch der Schutzbereich der vorliegenden Anmeldung nicht beschränkt ist. Die Kombination von Überbrückungskupplung, Drehzahl-/Drehmomentwandler und Torsionsschwingungsdämpfer und die Integration in einer modularen Baueinheit bietet den Vorteil, mit einer Antriebskomponente eine Vielzahl von unterschiedlichen Anforderungen zu erfüllen, wobei gleichzeitig eine geringe Baugröße bei hoher Funktionalität mit geringem konstruktivem Aufwand realisiert wird. Vormontiert kann die modulare Baueinheit vorgefertigt und als selbständige Antriebskomponente angeboten werden. Diese ist dann lediglich in bestehende Getriebekonzepte oder Mehrgetriebekonzepte zu integrieren. Die Anwendung an weitere Drehzahl-/Drehmomentwandlungseinrichtungen kann dabei im einfachsten Fall durch Realisierung einer kraftschlüssigen und/oder formschlüssigen Kopplung erfolgen. Die konkrete konstruktive Ausgestaltung der Kopplungsmöglichkeiten der einzelnen Komponenten untereinander und mit dem Antrieb beziehungsweise mit dem Abtrieb der Anfahreinheit liegen dabei im Ermessen des zuständigen Fachmannes.

### Bezugszeichenliste

- 1: Anfahreinheit
- 2: Hydrodynamischer Drehzahl-/Drehmomentenwandler
- 3: Überbrückungskupplung
- 4: Pumpenrad
- 5: Turbinenrad
- 6: Leitrad
- 7: Kupplungseingangsscheibe
- 8: Kupplungsausgangsscheibe
- 9: Antrieb
- 10: Abtrieb
- 11: Einrichtung zur Schwingungsdämpfung
- 12: hydraulischer Torsionsschwingungsdämpfer
- 13: Primärteil
- 14: Sekundärteil
- 15: Mittel zur Dämpfungskopplung
- 16: Mittel zur Federkopplung
- 17.1, 17.2: scheibenförmige Elemente
- 18: Gehäuseteil
- 19: erster Teil des Primärteils 13
- 20: Ausnehmung
- 21: Federeinrichtung
- 22: Federelement
- 23: Federtopf
- 24: Zwischenraum
- 25: Kammer
- 26: Dämpfungskammer
- 27: Verbindungselement
- 28: Buchse
- 29: Langloch
- 30: Anschlag
- 31: Vorsprung
- 32: Ausnehmung
- 33: Ausnehmung
- 35, 36: Seitenflächen
- 37: Kolbenelement
- 38: Mittel zur Beeinflussung der Betriebsmittelversorgung
- 39: Gehäuse
- 40: Gehäuseglocke
- 41: Deckelteil
- 43: scheibenförmiges Element
- 44: Reibbelag
- 45: Adapterelement
- 46: Verzahnung
- 47: Innenverzahnung Sekundärteil
- 48: Außenverzahnung Adapterelement
- 49: drehfeste Verbindung zwischen Adapterelement und Abtrieb
- 50: drehfeste Kopplung zwischen Turbinenrad und Adapterelement
- 51: Gehäuse
- 52: Lagerung
- 53: Aussparung
- 54: Innenraum
- 55: schwimmender Dämpfungsring
- 56: erste Verdrängungskammmer
- 57: zweite Verdrängungskammer

## Patentansprüche

1. Anfahreinheit (1) für den Einsatz in Antriebssystemen, insbesondere von Fahrzeugen
1.1 mit einem hydrodynamischen Drehzahl-/Drehmomentenwandler (2), umfassend wenigstens ein Pumpenrad (4) und ein Turbinenrad (5) und ein Leitrad (6);
1.2 mit einer Überbrückungskupplung (3);
1.3 mit einer Vorrichtung zur Dämpfung von Schwingungen (11);
1.4 die Vorrichtung zur Dämpfung von Schwingungen (11) umfaßt wenigstens einen Torsionsschwingungsdämpfer mit hydraulischer Dämpfung;
1.5 der Torsionsschwingungsdämpfer mit hydraulischer Dämpfung (12) umfaßt mindestens einen Primärteil (13) und einen Sekundärteil (14), welche in Umfangsrichtung relativ zueinander verdrehbar sind;
1.6 der Torsionsschwingungsdämpfer mit hydraulischer Dämpfung umfaßt des weiteren Mittel (15) zur Dämpfungskopplung und Mittel (16) zur Federkopplung;
1.7 die Mittel zur Dämpfungskopplung umfassen wenigstens eine zwischen Primärteil (13) und Sekundärteil (14) gebildete und mit einer Hydraulikflüssigkeit und/oder einem anderen Dämpfungsmedium befüllbare Kammer (26);
**gekennzeichnet durch** folgende Merkmale:
1.8 in der mit einer Hydraulikflüssigkeit und/oder einem anderen Dämpfungsmedium befüllbaren Kammer (26) ist ein ringförmiges Element (55) angeordnet, welches frei von einer formschlüssigen Verbindung zum Primär- und Sekundärteil (13, 14) ist;
1.9 der Torsionsschwingungsdämpfer (12) mit hydraulischer Dämpfung ist mit der Abtriebsseite (10) der Anfahreinheit (1) verbindbar,
1.10 die Abtriebsseiten von Überbrückungskupplung (3) und Drehzahl-/Drehmomentwandler (2) sind miteinander wenigstens mittelbar drehfest verbunden;
1.11 die Vorrichtung zur Dämpfung von Schwingungen (11) ist funktional der Überbrückungskupplung (3) nachgeschaltet ist;
1.12 die Überbrückungskupplung (3) ist als Scheibenkupplung, umfassend wenigstens eine Kupplungseingangsscheibe und eine Kupplungsausgangsscheibe (8), welche wenigstens mittelbar miteinander in Wirkverbindung bringbar sind, ausgeführt;
1.13 ein Element des Torsionsschwingungsdämpfers (12) mit hydraulischer Dämpfung bildet die Kupplungsausgangsscheibe (8) der Überbrückungskupplung (3).

2. Anfahreinheit (1) nach Anspruch 1, **dadurch gekennzeichnet, daß** die Überbrückungskupplung (3) und der hydrodynamische Drehzahl-/Drehmomentwandler (2) parallel geschaltet sind.

3. Anfahreinheit (1) nach einem der Ansprüche 1 bis 2, **dadurch gekennzeichnet, daß** der Torsionsschwingungsdämpfer (12) mit hydraulischer Dämpfung zwischen der Überbrückungskupplung (3) und dem Drehzahl-/Drehmomentwandler (2) angeordnet ist

4. Anfahreinheit (1) nach einem der Ansprüche 1 bis 3, **dadurch gekennzeichnet, daß** der Torsionsschwingungsdämpfer (12) mit hydraulischer Dämpfung Bestandteil der Überbrückungskupplung (3) ist.

5. Anfahreinheit (1) nach einem der Ansprüche 1 bis 4, **dadurch gekennzeichnet, daß** die Überbrückungskupplung (3) und der Torsionsschwingungsdämpfer mit hydraulischer Dämpfung als modulare Baueinheit ausgeführt sind.

6. Anfahreinheit (1) nach einem der Ansprüche 1 - 5, **gekennzeichnet durch** die folgenden Merkmale:
6.1 die Mittel (15) zur Realisierung der Dämpfungskopplung und die Mittel (16) zur Realisierung der Federkopplung sind in separaten, räumlich voneinander getrennt zwischen Primärteil (13) und Sekundärteil (14) gebildeten Kammern angeordnet;
6.2 die Mittel (15) zur Realisierung der Dämpfungskopplung umfassen Mittel zur Beeinflussung des Dämfpungsverhaltens.

7. Anfahreinheit (1) nach Anspruch 6, **dadurch gekennzeichnet, daß** die Mittel zur Beeinflussung des Dämpfungsverhaltens in der mit Dämpfungsmedium befüllbaren Kammer (26) integriert sind.

8. Anfahreinheit (1) nach Anspruch 7, **dadurch gekennzeichnet, daß** die Mittel zur Beeinflussung des Dämpfungsverhaltens wenigstens eine Drosselstelle umfassen.

9. Anfahreinheit (1) nach einem der Ansprüche 1 bis 8, **gekennzeichnet durch** dle folgenden Merkmale:
9.1 mit Mitteln zur Begrenzung des Verdrehwinkels zwischen dem Primärteil (13) und dem Sekundärteil (14);
9.2 die Mittel sind der Dämpfungskammer (26) zugeordnet;
9.3 die Mittel unterteilen die Dämpfungskammer in zwei, in ihrer Größe veränderliche Teilkammern und bilden eine Drosselstelle zwischen beiden Teilkammern.

10. Anfahreinheit (1) nach Anspruch 9, **gekennzeichnet durch** die folgenden Merkmale:
10.1 die Mittel umfassen wenigstens einen, an Sekundärteil (14) angeordneten Vorsprung;
10.2 der Vorsprung greift in Aussparungen am Primärteil (13) in Einbaulage in Umfangsrichtung derart ein, daß dieser relativ gegenüber dem Primärteil (13) verschiebbar ist;
10.3 die Aussparungen im Primärteil in Umfangsrichtung bilden einen Anschlag mit dem Vorsprung des Sekundärteils (14).

11. Anfahreinheit (1) nach Anspruch 10, **dadurch gekennzeichnet, daß** der Primärteil (13) oder der Sekundärteil (14) mehrere, miteinander über wenigstens ein Verbindungselement koppelbare Teilelemente umfaßt und der Vorsprung über das Verbindungselement realisiert wird.

12. Anfahreinheit (1) nach Anspruch 11, **dadurch gekennzeichnet, daß** das Verbindungselement in Form einer Schraube ausgeführt ist.

13. Anfahreinheit (1) nach einem der Ansprüche 1 bis 12, **dadurch gekennzeichnet, daß** die Mittel zur Realisierung der Federkopplung wenigstens eine, in Umfangsrichtung zwischen Primärteil (13) und Sekundärteil (14) wirksam werdende Federeinrichtung (21), umfassend wenigstens eine Druckfeder (22), aufweisen.

14. Anfahreinheit (1) nach Anspruch 13, **gekennzeichnet durch** die folgenden Merkmale:
14.1 das Primärteil (13) umfaßt in Umfangsrichtung verlaufende erste Ausnehmungen;
14.2 das Sekundärteil (14) umfaßt in Einbaulage zu den ersten Ausnehmungen am Primärteil hinsichtlich deren Abstand und Größe im wesentlichen komplementäre zweite Ausnehmungen;
14.3 jeder Federeinrichtung (21) ist an den Federenden jeweils ein Führungskörper zugeordnet, an welchem die beiden Massen - Primärteil (13) und Sekundärteil (14) - im Bereich der Ausnehmungen tangential angreift.

15. Anfahreinheit (1) nach einem der Ansprüche 1 bis 14, **gekennzeichnet durch** die folgenden Merkmale:
15.1 die zwischen Primärteil (13) und Sekundärteil (14) gebildete und mit einer Hydraulikflüssigkeit und/oder einem anderen Dämpfüngsmedium befüllbare Kammer (26) wird wenigstens von einem Teilbereich des Innenraumes (25, 54) zwischen Primärteil (13) und Sekundärteil (14) gebildet;
15.2 das ringförmige Element (55) bildet mit dem Primärteil (13) jeweils erste Verdrängungskammern (56) und dem Sekundärteil (14) jeweils zweite Verdrängungskammern (57),

16. Anfahreinheit (1) nach einem der Ansprüche 1 bis 15, **dadurch gekennzeichnet, daß** die Überbrückungskupplung (3) als Scheibenkupplung in Lamellenbauweise ausgeführt ist.

17. Anfahreinheit (1) nach Anspruch 16, **dadurch gekennzeichnet, daß** die Überbrückungskupplung (3) und der hydrodynamische Drehzahl-/Drehmomentenwandler (2) in einem gemeinsamen Gehäuse (40) angeordnet sind und die Überbrückungskupplung (3) im Betriebsmittel des hydrodynamischen Drehzahl-/Drehmomentenwandlers (2) umläuft.

18. Anfahreinheit (1) nach einem der Ansprüche 1 bis 17, **dadurch gekennzeichnet, daß** das ringförmige Element (55) einteilig oder mehrteilig in Umfangrichtung ausgeführt ist.

19. Anfahreinheit (1) nach einem der Ansprüche 1 bis 18, **dadurch gekennzeichnet, daß** das ringförmige Element (55) in axialer Richtung mehrteilig ausgeführt ist.

## Claims

1. A starting unit (1) for use in drive systems, especially for vehicles,
1.1 with a hydrodynamic speed-torque converter (2), comprising at least one pump wheel (4) and a turbine wheel (5) and a stator (6);
1.2 with a lock-up clutch (3);
1.3 with an apparatus for damping vibrations (11);
1.4 with the apparatus for damping vibrations (11) comprising at least one torsional vibration damper with hydraulic damping;
1.5 with the torsional vibration damper with hydraulic damping (12) comprising at least one primary part (13) and a secondary part (14) which can be rotated relative to each other in the circumferential direction;
1.6 with the torsional vibration damper with hydraulic damping (12) further comprising means (15) for damping coupling and means (16) for spring coupling;
1.7 with the means for damping coupling comprising at least one chamber (26) which is formed between the primary part (13) and the secondary part (14) and can be filled with a hydraulic liquid and/or any other damping medium, **characterized by** the following features:
1.8 an annular element (55) is arranged in the chamber (26) which can be filled with a hydraulic liquid and/or any other damping medium, which annular element is free from any interlocking connection with the primary and secondary part (13, 14);
1.9 the torsional vibration damper (12) with hydraulic damping can be connected with the driven side (10) of the starting unit (1);
1.10 the driven sides of the lock-up clutch (3) and the speed-torque converter (2) are torsionally rigidly connected with each other at least in an indirect fashion;
1.11 the apparatus for damping oscillations (11) is functionally downstream of the lock-up clutch (3);
1.12 he lock-up clutch (3) is arranged as a disk clutch comprising at least one clutch input disk and a clutch output disk (8) which can be brought into operative connection with each other at least in an indirect fashion;
1.13 an element of the torsional vibration damper (12) with hydraulic damping forms the clutch output disk (8) of the lock-up clutch (3).

2. A starting unit (1) as claimed in claim 1, **characterized in that** the lock-up clutch (3) and the hydrodynamic torque-speed converter (2) are connected in parallel.

3. A starting unit (1) as claimed in one of the claims 1 to 2, **characterized in that** the torsional vibration damper (12) with hydraulic damping is arranged between the lock-up clutch (3) and the speed-torque converter (2).

4. A starting unit (1) as claimed in one of the claims 1 to 3, **characterized in that** the torsional vibration damper (12) with hydraulic damping is a component of the lock-up clutch (3).

5. A starting unit (1) as claimed in one of the claims 1 to 4, **characterized in that** the lock-up clutch (3) and the torsional vibration damper with hydraulic damping are configured as a modular unit.

6. A starting unit (1) as claimed in one of the claims 1 to 5, **characterized by** the following features:
6.1 the means (15) for realizing the damping coupling and the means (16) for realizing the spring coupling are arranged in separate chambers which are spaced apart between primary part (13) and secondary part (14);
6.2 the means (15) for realizing the damping coupling comprise means for influencing the damping behavior.

7. A starting unit (1) as claimed in claim 6, **characterized in that** the means for influencing the damping behavior are integrated in the chamber (26) filled with the damping medium.

8. A starting unit (1) as claimed in claim 7, **characterized in that** the means for influencing the damping behavior comprise at least one throttle point.

9. A starting unit (1) as claimed in one of the claims 1 to 8, **characterized by** the following features:
9.1 with means for limiting the torsion angle between the primary part (13) and the secondary part (14);
9.2 the means are associated with the damping chamber (26);
9.3 the means subdivide the damping chamber into two partial chambers which can be changed with respect to their size and form a throttle point between the two partial chambers.

10. A starting unit (1) as claimed in claim 9, **characterized by** the following features:
10.1 the means comprise at least one projection arranged on the secondary part (14);
10.2 the projection engages in recesses on the primary part (13) in the circumferential direction in the mounted position such that the same is displaceable relative to the primary part (13);
10.3 the recesses in the primary part in the circumferential direction form a stop with a projection of the secondary part (14).

11. A starting unit (1) as claimed in claim 10, **characterized in that** the primary part (13) or the secondary part (14) comprises several partial elements which can be coupled with each other by way of at least one connecting element and that the projection is realized through the connecting element.

12. A starting unit (1) as claimed in claim 11, **characterized in that** the connecting element is arranged in the form of a screw.

13. A starting unit (1) as claimed in one of the claims 1 to 12, **characterized in that** the means for realizing the spring coupling comprise at least one spring device (21) which becomes effective in the circumferential direction between the primary part (13) and the secondary part (14) and which comprises at least one compression spring (22).

14. A starting unit (1) as claimed in claim 13, **characterized by** the following features:
14.1 the primary part (13) comprises first recesses extending in the circumferential direction;
14.2 the secondary part (14) comprises in the mounted position second recesses which are substantially complementary to the first recesses on the primary part 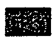 concerning their distance and size;
14.3 every spring device (21) is associated at the spring ends with one guide body each, on which the two masses, namely primary part (13) and secondary part (14), act tangentially in the region of the recesses.

15. A starting unit (1) as claimed in one of the claims 1 to 14, **characterized by** the following features:
15.1 the chamber (26) which is formed between the primary part (13) and the secondary part (14) and can be filled with a hydraulic liquid and/or any other damping medium is formed by at least one partial region of the inner space (25, 54) between the primary part (13) and the secondary part (14);
15.2 the annular element (55) forms with the primary part (13) first displacement chambers (56) and with the secondary part (14) second displacement chambers (57).

16. A starting unit (1) as claimed in one of the claims 1 to 15, **characterized in that** the lock-up clutch (3) is arranged as a disk clutch in multi-disk design.

17. A starting unit (1) as claimed in claim 16, **characterized in that** the lock-up clutch (3) and the hydrodynamic speed-torque converter (2) are arranged in a common housing (40) and the lock-up clutch (3) revolves in the service liquid of the hydrodynamic speed-torque converter (2).

18. A starting unit (1) as claimed in one of the claims 1 to 17, **characterized in that** the annular element (55) is provided with an arrangement in one or several parts in the circumferential direction.

19. A starting unit (1) as claimed in one of the claims 1 to 18, **characterized in that** the annular element (55) is provided with a multi-part arrangement in the axial direction.

## Revendications

1. Unité de démarrage (1) destinée à des systèmes moteurs, notamment pour des véhicules,
avec un convertisseur hydrodynamique de vitesse de rotation en couple de rotation (2) comprenant au moins une aube de pompe (4) et une aube de turbine (5) et une aube directrice (6) ;
avec un embrayage de pontage (3) ;
avec un dispositif d'amortissement des vibrations (11) ;
le dispositif d'amortissement des vibrations (11) comprenant au moins un amortisseur de vibrations de torsion à amortissement hydraulique ;
l'amortisseur de vibrations de torsion à amortissement hydraulique (12) comprenant au moins une partie primaire (13) et une partie secondaire (14) pouvant tourner dans le sens de la circonférence l'une par rapport à l'autre ;
l'amortisseur de vibrations de torsion à amortissement hydraulique comprenant en outre des moyens (15) pour l'accouplement à amortissement et des moyens (16) d'accouplement à ressort ;
les moyens d'accouplement à amortissement comprenant au moins une chambre (26) formée entre la partie primaire (13) et la partie secondaire (14) et pouvant être remplie d'un liquide hydraulique et/ou d'un autre fluide d'amortissement ;
**caractérisé en ce que** :
il est prévu dans la chambre (26) pouvant être remplie d'un liquide hydraulique et/ou d'un autre fluide d'amortissement un élément annulaire (55) qui n'est pas relié par engagement de la forme avec les parties primaire et secondaire (13, 14);
l'amortisseur de vibrations de torsion à amortissement hydraulique (12) peut être relié au côté de sortie (10) de l'unité de démarrage (1),
les côtés de sortie de l'embrayage de pontage (3) et du convertisseur de vitesse de rotation en couple de rotation (2) sont reliés entre eux au moins indirectement de manière solidaire en rotation ;
le dispositif d'amortissement des vibrations (11) est monté fonctionnellement en aval de l'embrayage de pontage (3) ;
l'embrayage de pontage (3) est conçu comme un embrayage à disque comprenant au moins un disque d'entrée d'embrayage et un disque de sortie d'embrayage (8) qui peuvent être reliés au moins indirectement l'un à l'autre de manière à coopérer ;
un élément de l'amortisseur de vibrations de torsion à amortissement hydraulique (12) forme le disque de sortie d'embrayage (8) de l'embrayage de pontage (3).

2. Unité de démarrage (1) selon la revendication 1, **caractérisée en ce que** l'embrayage de pontage (3) et le convertisseur de vitesse de rotation en couple de rotation (2) sont montés en parallèle.

3. Unité de démarrage (1) selon l'une quelconque des revendications 1 à 2, **caractérisée en ce que** l'amortisseur de vibrations de torsion à amortissement hydraulique (12) est disposé entre l'embrayage de pontage (3) et le convertisseur de vitesse de rotation en couple de rotation (2).

4. Unité de démarrage (1) selon l'une quelconque des revendications 1 à 3, **caractérisée en ce que** l'amortisseur de vibrations de torsion à amortissement hydraulique (12) fait partie de l'embrayage de pontage (3).

5. Unité de démarrage (1) selon l'une quelconque des revendications 1 à 4, **caractérisée en ce que** l'embrayage de pontage (3) et l'amortisseur de vibrations de torsion à amortissement hydraulique sont réalisés comme une unité de construction modulaire.

6. Unité de démarrage (1) selon l'une quelconque des revendications 1 à 5, **caractérisée en ce que** :
les moyens (15) pour la réalisation de l'accouplement à amortissement et les moyens (16) pour la réalisation de l'accouplement à ressort sont disposés dans des chambres distinctes et séparées l'une de l'autre dans l'espace entre la partie primaire (13) et la partie secondaire (14) ;
les moyens (15) pour la réalisation de l'accouplement à amortissement comprennent des moyens pour influencer le comportement d'amortissement.

7. Unité de démarrage (1) selon la revendication 6, **caractérisée en ce que** les moyens pour influencer le comportement d'amortissement sont intégrés dans la chambre (26) pouvant être remplie de fluide d'amortissement.

8. Unité de démarrage (1) selon la revendication 7, **caractérisée en ce que** les moyens pour influencer le comportement d'amortissement comprennent au moins un point d'étranglement.

9. Unité de démarrage (1) selon l'une quelconque des revendications 1 à 8, **caractérisée en ce que** :
elle comporte des moyens pour la limitation de l'angle de rotation entre la partie primaire (13) et le partie secondaire (14),
ces moyens sont associés à la chambre d'amortissement (26),
ces moyens partagent la chambre d'amortissement en deux parties de chambre de taille variable et forment un point d'étranglement entre les deux parties de chambre.

10. Unité de démarrage (1) selon la revendication 9, **caractérisée en ce que** :
les moyens comprennent au moins une saillie disposée sur la partie secondaire (14) ;
la saillie se met en prise, dans la position de montage, avec des évidements ménagés dans le sens de la circonférence sur la partie primaire (13), de telle sorte qu'elle peut coulisser par rapport à la partie primaire (13) ;
les évidements ménagés dans le sens de la circonférence sur la partie primaire forment une butée avec la saillie de la partie secondaire (14).

11. Unité de démarrage (1) selon la revendication 10, **caractérisée en ce que** la partie primaire (13) ou la partie secondaire (14) comprend plusieurs éléments partiels pouvant être reliés par au moins un élément d'assemblage et la saillie est constituée par l'élément d'assemblage.

12. Unité de démarrage (1) selon la revendication 11, **caractérisée en ce que** l'élément d'assemblage est réalisé sous la forme d'une vis.

13. Unité de démarrage (1) selon l'une quelconque des revendications 1 à 12, **caractérisée en ce que** les moyens pour la réalisation de l'accouplement à ressort comprennent au moins un dispositif de ressort (21) agissant dans le sens de la circonférence entre la partie primaire (13) et la partie secondaire (14) et comprenant au moins un ressort de compression (22).

14. Unité de démarrage (1) selon la revendication 13, **caractérisée en ce que** :
la partie primaire (13) comprend des premiers évidements ménagés dans le sens de la circonférence ;
la partie secondaire (14) possède des deuxièmes évidements sensiblement complémentaires des premiers évidements de la partie primaire, en ce qui concerne leur écartement et leur taille, dans l'état de montage ;
chaque dispositif de ressort (21) est associé aux extrémités des ressorts à un élément de guidage sur lequel les deux masses de la partie primaire (13) et de la partie secondaire (14), se mettent en prise tangentiellement au niveau des évidements.

15. Unité de démarrage (1) selon l'une quelconque des revendications 1 à 14, **caractérisée en ce que** :
la chambre (26) formée entre la partie primaire (13) et la partie secondaire (14) et pouvant être remplie d'un liquide hydraulique et/ou d'un autre fluide d'amortissement est formée au moins d'uns partie de l'espace intérieur (26, 54) entre la partie primaire (13) et la partie secondaire (14) ;
l'élément annulaire (55) forme avec la partie primaire (13) des premières chambres de refoulement (56) et avec la partie secondaire (14) des secondes chambres de refoulement (57).

16. Unité de démarrage (1) selon l'une quelconque des revendications 1 à 15, **caractérisée en ce que** l'embrayage de pontage (3) est construit comme un embrayage à disques multiples.

17. Unité de démarrage (1) selon la revendication 16, **caractérisée en ce que** l'embrayage de pontage (3) et le convertisseur hydrodynamique de vitesse de rotation en couple de rotation (2) sont disposés dans un logement (40) commun et l'embrayage de pontage (3) tourne dans le fluide de fonctionnement du convertisseur hydrodynamique de vitesse de rotation en couple de rotation (2).

18. Unité de démarrage (1) selon l'une quelconque des revendications 1 à 17, **caractérisée en ce que** l'élément annulaire (55) est construit en une ou plusieurs parties dans le sens de la circonférence.

19. Unité de démarrage (1) selon l'une quelconque des revendications 1 à 18, **caractérisée en ce que caractérisée en ce que** l'élément annulaire (55) est construit en plusieurs parties dans le sens axial.
